# EUROPEAN PATENT APPLICATION

(11) **EP 0 857 617 A2**
(43) Date of publication of application: **12.08.1998**
(21) Application number: 98102113.2
(22) Date of filing: 06.02.1998
(51) Int. Cl.: B60R 16/02

(54) **Multi-terminal and electrical junction box employing the same**

(30) Priority: 07.02.1997 JP 25558/97
(71) Applicant: SUMITOMO WIRING SYSTEMS, LTD., Yokkaichi City Mie 510 (JP)
(72) Inventor: Kawakita, Shinji, 1-14 Nishisuehiro-cho Yokkaichi-City Mie (JP)
(74) Representative: Glawe, Delfs, Moll & Partner

(57) **Abstract**

A multi-terminal having a common substrate and a wire pressure contact portion, and a substrate connecting portion on a terminal fitting connector. The multi-terminal allows for pressure contact with a wire core, piercing connection with a circuit which may be on a printed substrate, and connection to a terminal.

## Description

The present Invention relates to a multi-terminal for making a branched circuit connection in an electrical junction box, especially for use in an automobile. The multi-terminal allows the electrical junction box to be more compact and to facilitate assembly.

### BACKGROUND OF THE INVENTION

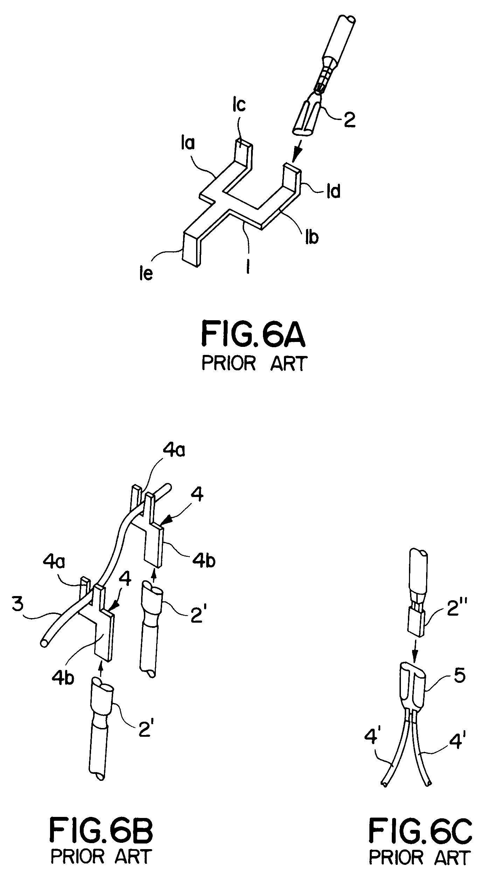

There are many known structures which are employed for making branched circuit connections in electrical junction boxes. One typical example is shown in Figure 6A. As shown therein, busbar 1 has been formed by stamping a conductive metal plate from sheet metal. It is part of the internal electrical circuit and comprises branched portions 1a and 1b which are bent to form tabs 1c and 1d, respectively. Tab 1e is connected to the internal circuit of the junction box, while tabs 1c and 1d are used to form a connection with pressure terminal 2. Pressure terminal 2 is connected to an external circuit.

Another conventional structure is shown in Figure 6B. Wire 3, which is a single core wire, is connected by means of pressure connector terminal 4 to pressure terminal 2' of the external circuit. Pressure terminal 4 comprises pressure connection blade 4a and a tab 4b, blade 4a being used to cut the insulation of wire 3 and to make electrical contact with the conductive core of the wire. Tab 4b, which is formed on the other side of pressure connection terminal 4, connects to pressure terminal 2' which, in turn, is in contact with the external circuit.

A third conventional structure employed to make a branched circuit in an electrical junction box is shown in Figure 6C. In this structure, a plurality of wires 4' are joined by means of a female pressure terminal 5 to a male pressure terminal 2''. In Figure 6C, wires 4' are connected to an internal circuit while male pressure terminal 2'' is connected to the external circuit.

One of the problems with the three different types of structures referred to in Figures 6A, 6B, and 6C, is that they must be positioned in a coplanar arrangement. This coplanar arrangement makes it difficult to decrease the spacing between the various electrical components and thus to form a compact junction box.

Another problem associated with this coplanar arrangement is that it is difficult to position connections in a vertically offset manner. In other words, it is desirable to have a 3-dimensional terminal rather than a coplanar terminal in order to allow for high density packing of circuits.

A further problem associated with these conventional structures is they are not suited for use with a printed substrate which contains electrical devices such as diodes. These printed electrical substrates are typically in sheet form and, in order to connect the circuitry of the substrate to one of the conventional structures as taught in Figures 6A-6C, a wire must be connected specifically from the electrical circuitry in the substrate to one of the aforementioned structures. This added wire also increases the number of electrical connections in the junction box and decreases the ability to make it more densely packed.

Another problem associated with these prior art structures is that they generally allow for branching to only one of the internal circuits. In other words, they do not permit a connection to both a busbar and to the wires of the internal circuits.

With the current rapid increase in the number of electrical components used in automobiles and their decrease in overall size, there is a need for increasing the density and compactness of electrical junction boxes. Presently, such boxes are made larger to accommodate the coplanar connections; however, this is not a suitable solution.

### SUMMARY OF THE INVENTION

The present Invention solves a number of the drawbacks associated with the prior art structures for forming branch connections in electrical junction boxes. The present Invention is a multi-terminal that provides connections with the printed circuit on a substrate, a single core wire from the internal circuitry of the junction box, and the tab of a busbar or the terminal of an external circuit. The multi-terminal also provides 3-dimensional branching connections that allow for compact design of the internal structure of the box.

Broadly, the multi-terminal of the present Invention for use in forming branched circuits in an electrical junction box comprises:
a common substrate, stamped from a conductive metal plate, and having a wire pressure-contact portion including a pressure-contact bearing against a wire core. A substrate connection portion comprising a projection with an end for penetrating a printed substrate to make contact with the circuit thereon is also provided, along with a terminal fitting connector having a tab for fitting and connecting to terminals.

Preferably, the wire pressure contact portion of the multi-terminal projects from one side of the upper end of the common substrate. It is also preferred that the substrate connecting portion is on the side of the upper end of the common substrate opposite the wire pressure contact portion. In this arrangement, the other end of the common substrate is bent to provide a position for the substrate connecting portion. It is further preferred that the terminal fitting connection project from the bottom end of the common substrate.

It should be noted that it is possible to have the substrate connecting portion projecting in the opposite direction from the wire pressure contact portion. It should also be noted that both the number and direction of the wire pressure contact portion, the substrate connection portion, and the terminal fitting portion, as formed on the common substrate, are not restricted in any manner.

The electrical junction box comprises upper and lower cases, which hold single core wires for the internal circuitry, and a printed substrate on which are mounted electrical devices; the junction box employs the multi-terminal of the present Invention in order to make branched connections between the various circuits. For example, a busbar can be molded into the upper case and/or the lower case and can connect to the multi-terminal of the present Invention. The substrate connection portion of the multi-terminal has a tab which pierces the insulated portion of the printed substrate and contacts the circuit. It is then soldered to form the connection. The terminal fitting portion of the multi-terminals is inserted into a terminal opening of a connector fitting portion in the junction box and is connected to a pressure terminal from an external circuit. The wire pressure contact portion is pressure connected to a single core wire of the internal circuit.

### BRIEF DESCRIPTION OF THE DRAWINGS

In the accompanying drawings, constituting a part hereof, and in which like reference characters indicate like parts,
- Figure 1: illustrates the multi-terminal of the present Invention;
- Figure 2: is an exploded view of the multi-terminal of the present Invention as used in an electrical junction box;
- Figure 3: illustrates the multi-terminal of the present Invention and another embodiment of the electrical junction box;
- Figure 4: is a cross-section of a portion of Figure 3;
- Figure 5: is an enlarged view of the multi-terminal of the present Invention; and
- Figures 6A, 6B and 6C: illustrate conventional structures used for forming branched circuits.

### DETAILED DESCRIPTION OF THE INVENTION

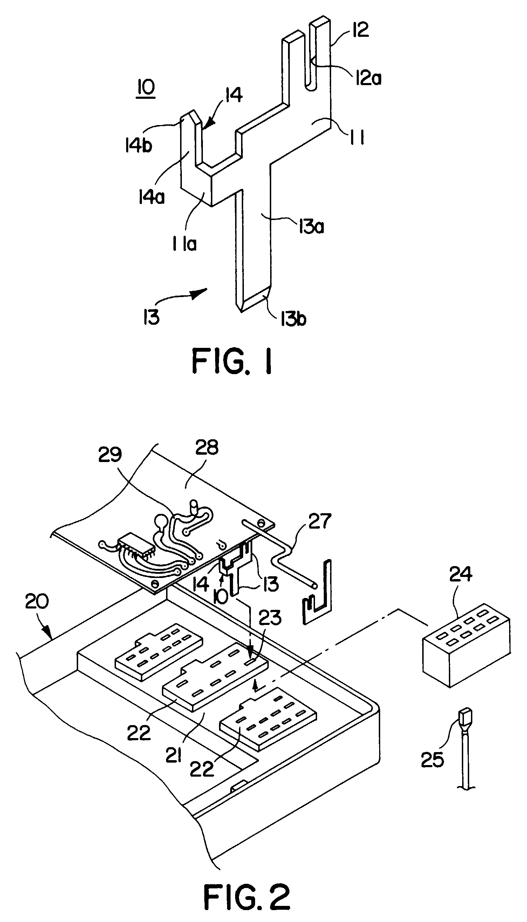

Referring to Figure 1, multi-terminal 10 is formed by stamping and then bending common substrate 11 from a conductive metal plate. Multi-terminal 10 comprises wire pressure contact portion 12, terminal fitting connector 13, and substrate connecting portion 14. Wire pressure contact portion 12 comprises an open pressure contact blade 12a which projects from one side of the upper end of common substrate 11. Pressure contact blade 12a is used to cut through the insulating material around the wire so as to contact the wire core. Terminal fitting connector 13 comprises flat plate projection 13a which projects from the lower end of common substrate 11 and terminates in male end tab 13b. On the other side of common substrate 11 is a bend and a right angle constituting substrate connecting portion 14. Substrate connecting portion 14 comprises long, thin projection 14a which projects from the upper end of bend 11a and piercing portion 14b is at the end of projection 14a.

Figure 2 illustrates how multi-terminal 10 is used in junction box case 20. Case 20 has bottom wall 21 and connector fitting portion 22 thereon; multi-terminal 10 is disposed on the inner surface of connector fitting portion 22. End tab 13b of downwardly projecting terminal fitting connector 13 is inserted into terminal opening 23 and common substrate 11 is supported by the inner surface of connector fitting portion 22. Connector 24 is disposed below connector fitting portion 22 and has holes corresponding to openings 23. End tab 13b is connected to female terminal 25 which is pressure-connected to female terminal 25 through connector 24.

Wire pressure contact portion 12, which projects upward from common substrate 11 of multi-terminal 10 forms a pressure connection with single core wire 27. As mentioned above, single core wire 27 is pressed against pressure contact blade 12a from above so that its insulating cover is penetrated and a pressure connection is established with the core of the wire. The connection with single core wire 27 can be formed before the wire is placed in electrical connection case 20.

Substrate connecting portion 14, which projects from bend 11a of common substrate 11 is connected to the electrical circuitry of print substrate 28. This is accomplished by having piercing portion 14b penetrate printed substrate 28 from below so that it contacts printed circuit 29. Piercing portion 14b and circuit 29 are then soldered to form a permanent connection.

Multi-terminal 10 can form a connection between wire pressure contact portion 12 and single core wire 27 of an internal circuit which is within the junction box and can also form a connection between substrate connecting portion 14 and circuit 29 of printed substrate 28. Furthermore, multi-terminal 10 can form a connection between terminal fitting connector 13 and a wire from an external circuit through connector 24. Thus, multi-terminal 10 forms a branched connection in an electrical junction box between a wire from an external circuit, single core wire 27, and circuit 29 of printed substrate 28.

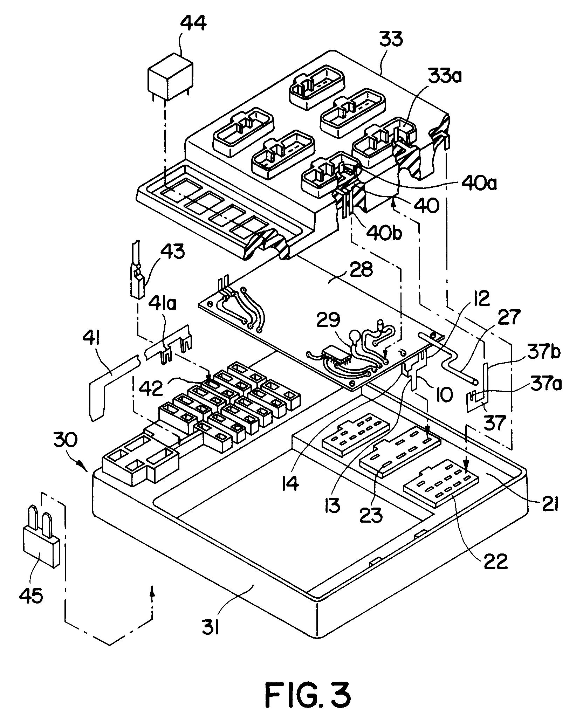

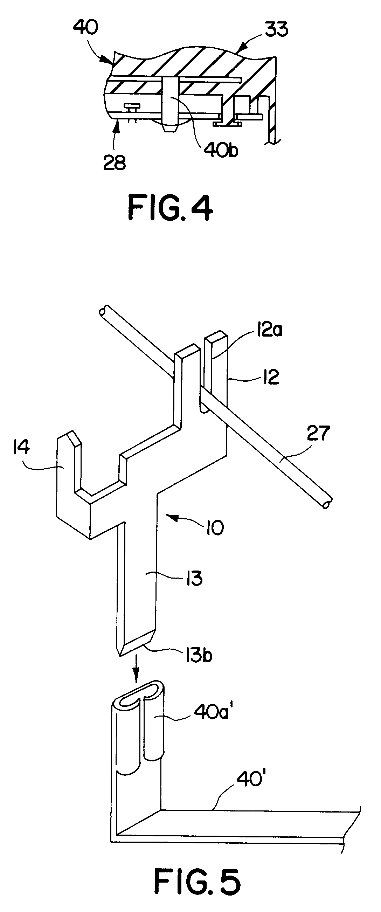

Referring to Figures 3 and 4, these figures illustrate another electrical junction box employing multi-terminal 10 of the present Invention. In electrical junction box 30, printed substrate 28 is disposed in lower case 31. Upper case 33 is attached to lower case 31 after printed substrate 28 is placed therein. Connector fitting portion 22 is formed on bottom wall 21 of lower case 31 for holding printed substrate 28 and receives multi-terminal 10 in opening 23 thereof. Terminal fitting connector 13 of multi-terminal 10 is connected to a connector (not shown in the Figure) fitted to connector fitting portion 22 in a manner similar to that described with respect to Figure 2 above.

Substrate connecting portion 14 of multi-terminal 10 is connected to circuit 29 of printed substrate 28. Wire pressure contact portion 12 forms a pressure contact with single core wire 27. Single core wire 27 is disposed between printed substrate 28 and upper case 33 of lower case 31 and forms a pressure contact with pressure wire contact portion 37a of terminal 37. Terminal connecting portion 37b is disposed on terminal 37 and is connected to connector fitting portion 33a which, in turn, is connected to an external wire.

Single-layer busbar 40 is molded into upper casing 33. Tab 40a projects upward from busbar 40 and is disposed in connector fitting portion 33a to provide a connection with the external wire. Tab 40b projecting downward from busbar 40, is soldered to circuit 29 of printed substrate 28. Printed substrate 28 is disposed below busbar 40. By connecting circuit 29 to multi-terminal 10, multi-terminal 10 is also connected to busbar 40.

Vertical busbar 41 is disposed in the rear half of lower case 31. U-shaped terminal 41a projects from vertical busbar 41 and is held in holding portion 42 of lower case 31. Terminal 41a is connected to terminal 43 which, in turn, is connected to the end of an external wire.

Relay 44 is in upper case 33 and is connected to busbar 40. Fuse 45 is attached to lower case 31 from below and is also connected to busbar 40. Thus, busbar 40 is connected to relay 44, printed substrate 28, fuse 45, and an external wire.

The busbar of the internal circuit in electrical junction box 30 of Figures 3 and 4 is molded into upper case 33 to form a single unit, thus making it possible to have a slim design for the electrical junction box. Also, since busbar 40 is connected via tab 40b to circuit 29, there is no need for any connector, thus reducing the number of parts and the amount of space required.

Referring to Figure 5, multi-terminal 10 is used to connect single core wire 27 and busbar 40' of an internal circuit. Female terminal 40a' is formed on busbar 40' and is fitted over tab 13b at the end of terminal fitting connector 13. Single core wire 27 is pressed into wire pressure contact portion 12 of multi-terminal 10, thus connecting busbar 40 and single core wire 27.

While only a limited number of specific embodiments of the present Invention have been expressly disclosed, it is, nonetheless, to be broadly construed, and not to be limited except by the character of the clams appended hereto.

## Claims

1. A multi-terminal (10) for branch circuits comprising a common substrate (11) having:
a wire pressure-contact portion (12) comprising a pressure-contact blade (12a) adapted to pressure contact a wire core (27);
a substrate connection portion comprising a projection (14b) having an end that contacts an electrical circuit (29) on a printed substrate (28); and
a terminal fitting connector (13) comprising a tab (13b) for fitting and connecting terminals.

2. The multi-terminal of Claim 1 wherein:
said wire pressure-contact portion projects from one side of an upper end of said common substrate;
another side of said upper end of said common substrate being bent to form a bent portion, said substrate connecting portion projecting from an upper end of said bent portion; and
said terminal fitting connector projects from a bottom of said common substrate.

3. An electrical junction box (30) comprising an upper case (33) and a lower case (31), said junction box containing a single wire core (27) connected to an internal circuit, a printed circuit substrate (28) having an electronic device and printed circuit mounted thereon (29), and the multi-terminal of (10) Claim 1;
a busbar (40) attached to said upper case and/or said lower case; a tab (40b) projecting from said busbar and connected directly to a conductive circuit (29) on said printed substrate;
a substrate connecting portion (14) of said multi-terminal penetrating said substrate and in electrical contact with said printed circuit,
a connector fitting portion (22) on said electrical junction box, a terminal fitting portion (13) on said multi-terminal extending into a terminal opening (23) on said connector fitting portion and electrically connected to a pressure contact terminal (25); and
said pressure-contact portion in contact with said wire core.

4. An electrical junction box (30) comprising an upper case (33) and a lower case (31), said junction box containing a single wire core (27) connected to an internal circuit, a printed circuit substrate (28) having an electronic device and printed circuit mounted thereon, and the multi-terminal of Claim 1;
a busbar (40) attached to said upper case and/or said lower case; a tab (40b) projecting from said busbar and connected directly to a conductive circuit (29) on said printed substrate;
a substrate connecting portion (14) of said multi-terminal penetrating said substrate and in electrical contact with said printed circuit,
a connector fitting portion (22) of said electrical junction box (30), a terminal fitting portion (13) on said multi-terminal extending into a terminal opening (23) on said connector fitting portion and electrically connected to a pressure contact terminal (25); and
said pressure-contact portion in contact with said wire core.
